# DEMANDE DE BREVET EUROPEEN

(11) **EP 2 119 804 A1**
(43) Date de publication de la demande: **18.11.2009**
(21) Numéro de dépôt: 08290450.9
(22) Date de dépôt: 14.05.2008
(51) Int. Cl.: C23C 2/06, C23C 2/26

(54) **Procédé de fabrication d'une bande métallique revêtue présentant un aspect amélioré**

(71) Demandeur: ArcelorMittal France, 93200 Saint-Denis (FR)
(72) Inventeur: Mataigne, Jean-Michel, 60300 Senlis (FR); Diez, Luc, 57000 Metz (FR)
(74) Mandataire: Plaisant, Sophie Marie

(57) **Abrégé**

L'invention a pour objet un procédé de fabrication d'une bande métallique présentant un revêtement métallique de protection contre la corrosion, comprenant les étapes consistant à :
- faire passer la bande métallique dans un bain de métal en fusion comprenant entre 2 et 8% en poids d'aluminium, de 0 à 5% en poids de magnésium et jusqu'à 0,3% en poids d'éléments d'addition, le complément étant du zinc et des impuretés inévitables, ledit bain étant maintenu à une température comprise entre 350 et 700°C puis
- essorer la bande métallique revêtue au moyen de buses projetant un gaz de part et d'autre de la bande, puis
- refroidir le revêtement de façon contrôlée jusqu'à sa solidification complète, ledit refroidissement étant effectué à une vitesse inférieure à 15°C/s entre la température en sortie d'essorage et le début de la solidification, puis à une température supérieure ou égale à 15°C/s entre le début et la fin de sa solidification,

ainsi qu'une bande métallique pouvant être obtenue par ce procédé et qu'une pièce métallique obtenue par déformation de cette bande.

## Description

L'invention concerne un procédé de fabrication d'une bande métallique présentant un aspect amélioré, plus particulièrement destinée à être utilisée pour la fabrication de pièces de peau pour véhicules terrestres à moteur, sans toutefois y être limitée.

Les tôles en acier destinées à la fabrication de pièces pour véhicule terrestre à moteur sont généralement revêtues d'une couche métallique de protection contre la corrosion, à base de zinc, déposée soit par trempé à chaud dans un bain liquide à base de zinc, soit par électrodéposition dans un bain électrolytique comprenant des ions du zinc.

Les tôles galvanisées destinées à la fabrication de pièces de peau, sont ensuite mises en forme et assemblées pour former une caisse en blanc, qui est ensuite revêtue par au moins une couche de peinture, laquelle assure une protection accrue contre la corrosion ainsi qu'un bon aspect de surface.

A cet effet, conventionnellement, les constructeurs automobiles appliquent d'abord sur la caisse en blanc une couche de cataphorèse, puis une couche de peinture d'apprêt, une couche de peinture de base, et éventuellement une couche de vernis. Pour obtenir un aspect de surface peint satisfaisant, il est généralement appliqué une épaisseur totale de peinture comprise entre 100 et 130 µm, constitué d'une couche de cataphorèse de 20 à 30 µm d'épaisseur, d'une couche de peinture d'apprêt de 40 à 50 µm, et une couche de peinture de base de 30 à 40 µm, par exemple.

Afin de limiter l'épaisseur des systèmes de peinture à une valeur inférieure à 100 µm, certains constructeurs automobiles ont proposé soit d'éviter l'étape de cataphorèse, soit encore de limiter le nombre de couches de peinture pour augmenter la productivité. Cependant, à ce jour, cette réduction d'épaisseur du système peinture s'effectue toujours au détriment de l'aspect de surface peint final de la pièce et n'est pas mise en oeuvre industriellement.

En effet, les revêtements à base de zinc servant de substrat de base présentent ce qu'on appelle une ondulation de leur surface, qui ne peut actuellement être compensée que par des couches importantes de peinture sous peine d'avoir un aspect dit de « peau d'orange » inacceptable pour des pièces de carrosserie.

L'ondulation W (waviness en anglais) de la surface est une irrégularité géométrique douce, pseudopériodique, d'assez grande longueur d'onde (0,8 à 10 mm) que l'on distingue de la rugosité R qui correspond aux irrégularités géométriques de faibles longueurs d'ondes (< 0.8mm).

Dans la présente invention, la moyenne arithmétique Wa du profil d'ondulation, exprimée en µm, a été retenue pour caractériser l'ondulation de la surface de la tôle, et les mesures d'ondulation ont été réalisées avec un seuil de coupure de 0,8 mm et désignées par Wa_{0,8}.

Le but de l'invention est donc de mettre à disposition un procédé de fabrication d'une bande métallique revêtue d'un revêtement anticorrosion, dont l'ondulation Wa_{0,8} soit réduite par rapport aux bandes de l'art antérieur, permettant ainsi de fabriquer des pièces métalliques peintes nécessitant une épaisseur totale de peinture réduite par rapport aux pièces de l'art antérieur.

A cet effet, un premier objet de l'invention est constitué par un procédé de fabrication d'une bande métallique présentant un revêtement métallique de protection contre la corrosion, comprenant les étapes consistant à :
- faire passer la bande métallique dans un bain de métal en fusion comprenant entre 2% en poids et 8% en poids d'aluminium, de 0 à 5% en poids de magnésium et jusqu'à 0,3% en poids d'éléments d'addition, le complément étant du zinc et des impuretés inévitables, ledit bain étant maintenu à une température comprise entre 350 et 700°C puis
- essorer la bande métallique revêtue au moyen de buses projetant un gaz de part et d'autre de la bande, puis
- refroidir le revêtement de façon contrôlée jusqu'à sa solidification complète, ledit refroidissement étant effectué à une vitesse inférieure à 15°C/s entre la température en sortie d'essorage et le début de la solidification, puis à une température supérieure ou égale à 15°C/s entre le début et la fin de sa solidification.

Dans des modes de réalisations préférés, le procédé selon l'invention peut en outre comprendre les caractéristiques suivantes, prises seules ou en combinaison :
- le refroidissement est effectué à une vitesse inférieure à 10°C/s entre la température en sortie d'essorage et le début de la solidification, puis à une température supérieure ou égale à 15°C/s entre le début et la fin de sa solidification,
- le refroidissement est effectué à une vitesse inférieure à 10°C/s entre la température en sortie d'essorage et le début de la solidification, puis à une température supérieure ou égale à 20°C/s entre le début et la fin de sa solidification,
- la bande métallique est une bande d'acier.

L'invention a également pour objet une bande métallique laminée à froid et revêtue mais non skin-passée, pouvant être obtenue par le procédé selon l'invention, dont le revêtement métallique comprend de 2 à 8% en poids d'aluminium, de 0 à 5% en poids de magnésium, jusqu'à 0,3% en poids d'éléments additionnels, le complément étant constitué de zinc et d'impuretés inévitables, ledit revêtement présentant une ondulation Wa_{0,8} inférieure ou égale à 0,5 µm, de préférence inférieure ou égale à 0,45 µm.

Dans des modes de réalisations préférés, la bande métallique selon l'invention peut en outre comprendre les caractéristiques suivantes, prises seules ou en combinaison :
- le revêtement métallique ne contient pas de magnésium,
- le revêtement métallique contient de 1 à 4% en poids de magnésium,
- la bande métallique est constituée d'acier.

L'invention a également pour objet une pièce métallique obtenue par déformation d'une bande métallique, dont le revêtement présente une ondulation Wa_{0,8} inférieure ou égale à 0,35 µm, de préférence inférieure ou égale à 0,32, voire 0,31 µm, ladite bande métallique ayant éventuellement subi une opération de skin-pass avant déformation.

Les caractéristiques et avantages de la présente invention apparaîtront mieux au cours de la description qui va suivre, donnée à titre d'exemple non limitatif.

La première étape du procédé selon l'invention consiste à faire passer en continu une bande métallique, telle qu'une bande d'acier, dans un bain de revêtement contenant du métal en fusion, contenu dans un creuset.

La vitesse de défilement de la bande sur les lignes industrielles est en général comprise entre 80m/min et 200m/min, par exemple.

La composition du bain de revêtement à utiliser dans le procédé selon l'invention est à base de zinc et contient de 2% à 8% en poids d'aluminium, qui est donc un élément indispensable du revêtement. Les inventeurs ont constaté qu'un revêtement comprenant moins de 2% en poids d'aluminium ne permettait pas d'obtenir d'amélioration de l'ondulation par le procédé selon l'invention. De même, un revêtement comprenant plus de 8% en poids d'aluminium ne permet pas non plus d'obtenir cet effet recherché pour l'invention. Cet élément permet également d'améliorer la résistance à la corrosion.

Le bain peut également contenir jusqu'à 5% en poids de magnésium afin d'améliorer la résistance à la corrosion du revêtement galvanisé et en particulier sa résistance contre la rouille rouge. On limite sa teneur dans le bain à 5% en poids car le revêtement obtenu pourrait présenter des problèmes de fragilité et d'adhérence lors de la mise en forme ultérieure, pour des teneurs supérieures. En outre, les inventeurs ont constaté que l'ajout de cet élément ne remettait pas en cause les résultats obtenus sur l'ondulation par l'ajout d'aluminium.

La composition du bain peut également contenir jusqu'à 0,3% en poids d'éléments optionnels d'addition tels que Si, Sb, Pb, Ti, Ca, Mn, Sn, La, Ce, Cr, Ni, Zr ou Bi. Ces différents éléments peuvent permettre, entre autres, d'améliorer la résistance à la corrosion du revêtement ou bien sa fragilité ou son adhésion, par exemple. L'homme du métier qui connaît leurs effets sur les caractéristiques du revêtement saura les employer en fonction du but complémentaire recherché. On a également vérifié que ces éléments n'interféraient pas avec la maîtrise de l'ondulation obtenue par le procédé selon l'invention.

Enfin le bain peut contenir des impuretés inévitables provenant des lingots d'alimentation du creuset ou bien encore du passage de la bande dans le bain. On pourra ainsi citer notamment, le fer, etc..,

Le bain est maintenu à une température comprise entre le liquidus et 700°C, la température du liquidus variant en fonction de sa composition. Pour la gamme de revêtements utilisés dans la présente invention, cette température sera donc comprise entre 350 et 700°C. On rappellera que le liquidus est la température au-delà de laquelle un alliage est à l'état entièrement fondu, le solidus étant la température en-dessous de laquelle un alliage est à l'état entièrement solidifié.

Après passage dans le creuset, la bande métallique revêtue sur ses deux faces est ensuite soumise à un essorage au moyen de buses placées de part et d'autre de la bande qui projettent un gaz, tel que de l'air ou un gaz inerte, vers la surface de la bande. Cette opération classique, bien connue de l'homme du métier, permet de régler l'épaisseur du revêtement de façon précise, alors qu'il n'est pas encore solidifié.

A l'issue de l'essorage, l'étape essentielle du procédé selon l'invention est le refroidissement contrôlé du revêtement jusqu'à sa solidification complète.

En effet, les présents inventeurs ont constaté qu'il était nécessaire de refroidir le revêtement de façon différentié avant le début de la solidification et dès le début de celle-ci.

Ainsi, le refroidissement doit être effectué à une vitesse inférieure à 15°C/s, de préférence inférieure à 10°C/s, et de façon plus particulièrement préférée inférieure ou égale à 5°C/s, entre la température en sortie d'essorage et le début de la solidification, puis à une température supérieure ou égale à 15°C/s, de préférence supérieure à 20°C/s, entre le début et la fin de sa solidification.

En respectant ces consignes, on observe en effet une amélioration surprenante et significative de l'ondulation des revêtements en question, comme le montrent les essais présentés plus loin.

Le refroidissement jusqu'à la solidification pourra être obtenu par convection naturelle si l'on souhaite refroidir à une vitesse ne dépassant pas environ 5°C/s. Au-delà, il sera généralement nécessaire de procéder à un refroidissement forcé par tout moyen technique adapté, tel qu'un soufflage de gaz froid, par exemple.

De la même façon, le refroidissement à partir du début de solidification se fera normalement par refroidissement forcé.

Lorsque la tôle revêtue est complètement refroidie, elle peut subir une opération de skin-pass qui permet de lui conférer une texture facilitant sa mise en forme ultérieure. En effet, l'opération du skin-pass permet de transférer à la surface de la tôle une rugosité suffisante pour que sa mise en forme s'effectue dans de bonnes conditions, en favorisant une bonne rétention de l'huile appliquée sur la tôle avant sa mise en forme.

Cette opération de skin-pass est généralement réalisée pour les tôles métalliques destinées à la fabrication de pièces de carrosserie pour véhicules terrestres à moteur. Lorsque les tôles métalliques selon l'invention sont destinées à la fabrication d'appareils électroménagers, par exemple, on ne procède pas à cette opération supplémentaire.

La tôle skin-passée ou non est ensuite mise en forme, par exemple par emboutissage, pliage ou profilage, pour former une pièce que l'on peut ensuite mettre en peinture. Dans le cas des pièces pour l'électroménager, on peut aussi soumettre éventuellement cette couche de peinture à un recuit par des moyens physiques et/ou chimiques, connus en eux-mêmes. A cet effet, on peut faire passer la pièce peinte au travers d'un four à air chaud ou à induction, ou encore sous des lampes UV ou sous un dispositif diffusant des faisceaux d'électrons.

Pour la production de pièces pour l'automobile, on la trempe dans un bain de cataphorèse, et on applique successivement, une couche de peinture d'apprêt, une couche de peinture de base, et éventuellement une couche de vernis de finition.

Avant d'appliquer la couche de cataphorèse sur la pièce, celle-ci est préalablement dégraissée puis phosphatée de manière à assurer l'adhérence de la cataphorèse. La couche de cataphorèse assure à la pièce une protection complémentaire contre la corrosion. La couche de peinture d'apprêt, généralement appliquée au pistolet, prépare l'apparence finale de la pièce et la protège contre le gravillonnage et contre les UV. La couche de peinture de base confère à la pièce sa couleur et son apparence finale. La couche de vernis confère à la surface de la pièce une bonne résistance mécanique, une résistance contre les agents chimiques agressifs et un bon aspect de surface.

La couche de peinture (ou système peinture) mise en oeuvre pour protéger et garantir un aspect de surface optimal aux pièces galvanisées, présente par exemple une couche de cataphorèse de 10 à 20 µm d'épaisseur, une couche de peinture d'apprêt inférieure à 30 µm, et une couche de peinture de base inférieure à 40 µm.

Dans les cas, où le système peinture comprend en outre une couche de vernis, les épaisseurs des différentes couches de peinture sont généralement les suivantes :
- couche de cataphorèse : inférieure à 10 à 20 µm,
- couche de peinture d'apprêt : inférieure à 20 µm,
- couche de peinture de base : inférieure à 20 µm et avantageusement inférieure à 10 µm, et
- couche-de vernis : de préférence inférieure à inférieure à 30 µm.

Le système peinture pourra également ne pas comprendre de couche de cataphorèse, et ne comprendre qu'une couche de peinture d'apprêt et une couche de peinture de base et éventuellement une couche de vernis.

### Essais

On réalise les essais à partir d'une tôle métallique en acier de type IF-Ti laminée à froid, que l'on fait passer dans un creuset contenant un bain métallique à base de zinc comprenant 4% en poids d'aluminium et 3% en poids de magnésium. Il est maintenu à une température de 430°C, soit environ 70°C au-delà du liquidus de la composition. Le solidus de cette composition est de 340°C.

A la sortie du bain, le revêtement obtenu est essoré à l'azote au moyen de deux buses classiques de façon à obtenir une épaisseur de revêtement de l'ordre de 7µm.

Au dessus de ces buses d'essorage sont placés une série de caissons de refroidissement, de part et d'autre de la bande, caissons permettant de souffler de l'air pour solidifier le revêtement par convection forcée. En fonction du débit, de la température du gaz de soufflage et du nombre de caissons mis en service, on peut régler la vitesse de refroidissement entre 5 et 50 °C/s.

En jouant sur ces trois paramètres, on réalise une série d'essais de manière à obtenir des refroidissements forcés contrôlés à différentes vitesses de refroidissement. Lorsque tous les caissons sont déconnectés, le revêtement n'est soumis qu'à une convection naturelle à la vitesse d'environ 5°C/s.

Une fois les essais réalisés, on mesure les valeurs d'ondulation Wa_{0,8}, Cette mesure consiste à acquérir par palpation mécanique, sans patin, un profil de la tôle d'une longueur de 50 mm, mesuré à 45° de la direction de laminage. On retranche au signal obtenu l'approximation de sa forme générale par un polynôme de degré au moins 5. L'ondulation Wa est alors isolée de la rugosité Ra par un filtre gaussien au seuil de coupure de 0,8 mm.

Les résultats obtenus sont rassemblés dans le tableau 1 suivant :

**Tableau 1**

| **Essai** | **Vitesse de refroidissement lors de la solidification (°C/s)** | **Ondulation Wa_{0,8} (**µ**m)** |
|---|---|---|
| Tôle 1 | 5 | 1,21 |
| Tôle 2 | 10 | 0,92 |
| Tôle 3* | 15 | 0,43 |
| Tôle 4* | 20 | 0,39 |

| | | |
|---|---|---|
| * : essai selon l'invention | | |

On constate qu'à partir d'une vitesse de refroidissement lors de la solidification supérieure ou égale à 15°C/s, on obtient une ondulation spectaculairement réduite, à l'état non skin-passé.

Pour l'ensemble de ces quatre essais, le revêtement a été refroidi par convection naturelle, à une vitesse de refroidissement de 5°C/s, avant d'atteindre le début de la solidification.

Les présents inventeurs ont en effet constaté qu'un refroidissement trop rapide dans cette première phase était également néfaste pour l'aspect du revêtement, comme le montre la série d'essais suivants.

On reprend des échantillons de la même bande que pour les essais précédents que l'on revêt et essore de la même façon, en faisant varier la vitesse de refroidissement avant le début de la solidification à l'aide de caissons de refroidissements placés à la sortie de l'opération d'essorage.

A partir du début de solidification, la vitesse de refroidissement est réglées comme décrit précédemment, à une vitesse de 20°C/s pour tous les échantillons.

Les valeurs d'ondulation mesurées sont rassemblées dans le tableau 2 qui suit, avec rappel des résultats obtenus avec la tôle 4 selon l'invention :

**Tableau 2**

| **Essai** | **Vitesse de refroidissement avant le début de la solidification (°C/s)** | **Ondulation Wa_{0,8} (**µ**m)** |
|---|---|---|
| Tôle 4* | 5 | 0,39 |
| Tôle 5* | 10 | 0,47 |
| Tôle 6 | 15 | 3.01 |

| | | |
|---|---|---|
| * : essai selon l'invention | | |

On constate que cette première étape de refroidissement est également importante pour l'obtention de l'aspect de surface recherché, ce qui amène à conclure que l'ensemble du processus de refroidissement doit être contrôlé.

Par ailleurs, les inventeurs ont réalisé une troisième série d'essais pour établit le domaine de composition du revêtement dans lequel l'effet sur l'ondulation peut être obtenu par le procédé selon l'invention.

Les compositions des bains de revêtement testés sont à base de zinc auquel on a ajouté des quantités variables d'aluminium et éventuellement de magnésium.

Les vitesses de refroidissement avant le début de la solidification ont été réglées à 5C/s et les vitesses de refroidissement pendant la solidification ont été réglées à 20°C/s.

Les résultats obtenus sont rassemblés dans le tableau suivant, avec rappel des résultats obtenus pour la tôle 4 selon l'invention :

**Tableau 3**

| **Essai** | **Composition du revêtement** | **Ondulation Wa_{0,8} (**µ**m)** |
|---|---|---|
| Tôle 4* | 4% Al - 3% Mg - Zn | 0,39 |
| Tôle 7 | 0,3 % Al - Zn | 0,71 |
| Tôle 8 | 1,5 % Al -1,5 % Mg - Zn | 0,84 |
| Tôle 9 | 11% Al - 3% Mg - Zn | 0,68 |

| | | |
|---|---|---|
| * : essai selon l'invention | | |

On constate également que l'effet de nivellement de l'ondulation n'est pas obtenu pour n'importe quel revêtement galvanisé, mais uniquement pour les revêtements dont la composition respecte les gammes définies par la présente invention.

Afin de vérifier que ces bons résultats en terme d'ondulation de la tôle avant skin-pass se retrouvaient bien sur la pièce emboutie, des essais ont été réalisés sur une partie des échantillons précédemment préparés.

Ces échantillons ont été préalablement soumis à une opération de skin-pass avec un taux de déformation de 1,5%, puis emboutis selon un mode de déformation équibiaxiale à 3,5% (Marciniak).

Les résultats sont rassemblés dans le tableau suivant :

**Tableau 4**

| **Essai** | **Ondulation Wa_{0,8} (**µ**m) avant emboutissage et après skin-pass** | **Ondulation Wa_{0,8} (**µ**m) après emboutissage** |
|---|---|---|
| Tôle 4* | 0,32 | 0,30 |
| Tôle 7 | 0,41 | 0,63 |

| | | |
|---|---|---|
| * : essai selon l'invention | | |

On constate de façon tout à fait surprenante que l'ondulation après emboutissage de l'essai selon l'invention est encore améliorée par rapport à son niveau avant emboutissage, permettant ainsi d'atteindre des niveaux d'ondulation non accessibles par les procédés de l'art antérieur.

A contrario, l'essai réalisé à partir d'une tôle galvanisée standard montre une dégradation des résultats obtenus après emboutissage, ne permettant pas de descendre en dessous du seuil de 0,35 µm d'ondulation pour une tôle skin-passée.

## Revendications

1. Procédé de fabrication d'une bande métallique présentant un revêtement métallique de protection contre la corrosion, comprenant les étapes consistant à :
- faire passer la bande métallique dans un bain de métal en fusion comprenant entre 2 et 8% en poids d'aluminium, de 0 à 5% en poids de magnésium et jusqu'à 0,3% en poids d'éléments d'addition, le complément étant du zinc et des impuretés inévitables, ledit bain étant maintenu à une température comprise entre 350 et 700°C puis
- essorer la bande métallique revêtue au moyen de buses projetant un gaz de part et d'autre de la bande, puis
- refroidir le revêtement de façon contrôlée jusqu'à sa solidification complète, ledit refroidissement étant effectué à une vitesse inférieure à 15°C/s entre la température en sortie d'essorage et le début de la solidification, puis à une température supérieure ou égale à 15°C/s entre le début et la fin de sa solidification.

2. Procédé selon la revendication 1, pour lequel ledit refroidissement est effectué à une vitesse inférieure à 10°C/s entre la température en sortie d'essorage et le début de la solidification, puis à une température supérieure ou égale à 15°C/s entre le début et la fin de sa solidification.

3. Procédé selon la revendication 2, pour lequel ledit refroidissement est effectué à une vitesse inférieure à 10°C/s entre la température en sortie d'essorage et le début de la solidification, puis à une température supérieure ou égale à 20°C/s entre le début et la fin de sa solidification.

4. Procédé selon l'une quelconque des revendications 1 à 3, pour lequel la bande métallique est une bande d'acier.

5. Bande métallique laminée à froid et revêtue mais non skin-passée, pouvant être obtenue par le procédé selon l'une quelconque des revendications 1 à 4, dont le revêtement métallique comprend de 2 à 8% en poids d'aluminium, de 0 à 5% en poids de magnésium, jusqu'à 0,3% en poids d'éléments additionnels, le complément étant constitué de zinc et d'impuretés inévitables, ledit revêtement présentant une ondulation Wa_{0,8} inférieure ou égale à 0,5 µm.

6. Bande métallique selon la revendication 5, dont le revêtement métallique ne contient pas de magnésium.

7. Bande métallique selon la revendication 5, dont le revêtement métallique contient de 1 à 4% en poids de magnésium.

8. Bande métallique selon l'une quelconque des revendications 5 à 7, constituée d'acier.

9. Pièce métallique obtenue par déformation d'une bande métallique selon l'une quelconque des revendications 5 à 8, dont le revêtement présente une ondulation Wa_{0,8} inférieure ou égale à 0,48 µm.

10. Pièce métallique selon la revendication 9, obtenue par déformation d'une bande métallique selon l'une quelconque des revendications, ayant subi une opération de skin-pass avant déformation, dont le revêtement présente une ondulation Wa_{0,8} inférieure ou égale à 0,35 µm.
